# EUROPÄISCHE PATENTSCHRIFT

(11) **EP 0 907 493 B1**
(45) Veröffentlichungstag und Bekanntmachung des Hinweises auf die Patenterteilung: **06.03.2002**
(21) Anmeldenummer: 97922926.7
(22) Anmeldetag: 30.04.1997
(51) Int. Cl.: B29C 49/06, B29C 49/22, B65D 35/08, B32B 1/00

(54) **KUNSTSTOFFTUBENKÖRPER UND VERFAHREN ZU DEREN HERSTELLUNG**
PLASTIC TUBE BODY AND PROCESS FOR MANUFACTURING THE SAME
CORPS DE TUBE EN PLASTIQUE ET SON PROCEDE DE FABRICATION

(30) Priorität: 30.04.1996 DE 19617349
(43) Veröffentlichungstag der Anmeldung: 14.04.1999
(73) Patentinhaber: Kühn, Hans, 76467 Bietigheim (DE)
(72) Erfinder: Kühn, Hans, 76467 Bietigheim (DE)
(74) Vertreter: Hess, Peter K., Dipl.-Phys.
(86) Internationale Anmeldenummer: EP9702224
(87) Internationale Veröffentlichungsnummer: WO9740972

(56) Entgegenhaltungen:
- EP-A- 0 170 594
- EP-A- 0 302 117
- EP-A- 0 585 846
- EP-A- 0 677 374
- DE-A- 1 479 790
- FR-A- 2 545 448
- GB-A- 2 191 730
- US-A- 2 562 523
- US-A- 3 855 380

## Beschreibung

### 1. Technisches Gebiet

Die vorliegende Erfindung bezieht sich auf Kunststofftubenkörper und auf Verfahren zu deren Herstellung. Insbesondere bezieht sich die vorliegende Erfindung auf ein Verfahren zum Herstellen von Kunststofftubenkörpern, gemäß dem zunächst sogenannte Tubenpreforms (Vorformen) hergestellt werden, die dann zu einem späteren Zeitpunkt in die endgültige Tubenform umgeformt werden.

### 2. Der Stand der Technik

Im Stand der Technik sind verschiedene Verfahren bekannt, mit denen Kunststoffbehälter beispielsweise aus thermoplastischem Kunststoff hergestellt werden können. Hierzu bieten sich verschiedene, dem Fachmann wohl bekannte Verfahren wie Spritzgießen, Blasformung, Laminatverfahren, Polyfoil und koextrudierende Verfahren an.

Aufgrund der unterschiedlichen Eigenschaften der Inhaltsstoffe, mit denen der Behälter später zu füllen ist, wird eine entsprechende Materialauswahl getroffen. Kriterien für die Materialauswahl sind neben dem Preis und selbstverständlichen Parametern wie Festigkeit, etc. auch die Aggressivität oder die Flüchtigkeit des Inhaltsstoffes, oder ein gewünschtes inertes Verhalten zwischen Inhaltsstoff und Behälter, wie es meist bei medizinischen Wirkstoffen notwendig ist.

Gerade bei Behältern für medizinische oder pharmazeutische Inhaltsstoffe ist ein Ausdiffundieren einer oder mehrerer Wirkstoffkomponenten äußerst unerwünscht, da durch den Verlust der flüchtigen Komponenten die prozentuale Mengenzusammensetzung nicht mehr den ursprünglichen Angaben entspricht, so daß eine ärztlich verordnete Dosierung, die auf der ursprünglichen Zusammensetzung des Mittels beruht, nicht mehr gewährleistet ist.

Ferner ist beim Ausdiffundieren von als Lösungsmittel dienenden, flüchtigen Inhaltsstoffen eine Veränderung der Konsistenz zu verzeichnen, die zu einem schnelleren Altern durch Austrocknen oder zu einer schlechteren Anwendbarkeit führen kann.

Da einzelne Materialien jedoch nur selten alle an sie gestellten Anforderungen erfüllen können (wie bspw. gute Verträglichkeit mit dem Inhaltsstoff und Undurchdringbarkeit für bestimmte flüchtige Komponenten davon), hat man bereits für verschiedene Inhaltsstoffe Mehrschichtbehälter (insbesondere Tuben) in Betracht gezogen, bei denen die unterschiedlichen Schichten aus unterschiedlichen Materialien bestehen können. Beispielsweise sind derartige mehrschichtige Behälter durch Kalandrierverfahren hergestellt worden, bei denen die unterschiedlichen Werkstoffe extrudiert und in einer Walzenanordnug kalandriert, d.h. zu Folien bzw. Mehrschichtfolien gewalzt werden. Die derart hergestellten Folien werden dann mit beispielsweise im Spritzgußverfahren hergestellten Schulter- bzw. Abschlußstücken verschweißt.

Allerdings weisen derartige Schulter- bzw. Abschlußstücke nicht die Eigenschaften der Mehrschichtfolie auf, da diese auf herkömmliche Art durch Spritzgießverfahren hergestellt worden sind und nur aus einer Werkstoffschicht bestehen.

Eine weitere Möglichkeit zur Erzielung eines vollständigen Diffusionsschutzes ist die Bereitstellung von kostenintensiven, aufwendig herzustellenden Metallbehältern, die durch die molekulare Dichte von Metall eine natürliche Diffusionsbarriere darstellen. Diese Metallbehälter können mit einer Zusatzschicht im Innenbereich versehen werden, um ein inertes Verhalten zwischen Fluid und Behälterwand zu gewährleisten. Jedoch ist die Herstellung von Metallbehältern nicht nur in der Fertigung selbst durch sehr viele Einzelschritte (Walzen, Beschichten mit Kunststoff, Formen der Behälter, Falzen und Bördeln der Längsnaht, etc.) sehr viel aufwendiger, sondern auch die Fertigungszeiten und Materialkosten sind erheblich höher.

Aus diesem Grund ist bereits erwogen worden, mehrschichtige Kunststoffbehälter in einem Mehrschicht-Spritzgießverfahren herzustellen. Ein derartiges Verfahren ist beispielsweise aus der EP 0 537 346 A1 bekannt. Gemäß diesem Verfahren wird in das Spritzgießwerkzeug zunächst eine sogenannte Umhüllungsschicht eingespritzt, und nachfolgend oder simultan eine sogenannte Kernschicht, die zuvor durch Verwendung eines Aufschäummittels aufgeschäumt worden ist. Auf diese Art und Weise entsteht ein Behälter mit einer zweischichtigen Wand, deren Komponenten aus unterschiedlichen Materialien bestehen.

Ein weiteres Problem, das bei der Herstellung von Kunststoffbehältern zu beachten ist, ist die Transportgröße der Behälter. Häufig werden die Kunststoffbehälter nämlich nicht bei dem Unternehmen hergestellt, in dem sie mit dem späteren Inhaltsstoff gefüllt werden, sondern von einem räumlich getrennten Zulieferungsbetrieb. Da Kunststoffbehälter je nach Anwendungsgebiet eine erhebliche Größe, jedoch kaum Gewicht haben, tritt ein Transportproblem insoweit auf, als das die Frachtgebühren sich neben dem Gewicht der zu transportierenden Ware insbesondere auch nach ihrem Volumen berechnen. Daher wird bei großvolumigen (leeren) Behältern ein Transport erhebliche Kosten verursachen, da beispielsweise ein Lastkraftwagen im wesentlichen "Luft" transportiert.

Aus diesem Grund ist bereits vorgeschlagen worden, Kunststoffbehälter nicht in ihrer endgültigen Form zum Abnehmer zu bringen, sondern in der Form von sogenannten "Vorformen" ("Preforms"). Als Beispiele sind in diesem Zusammenhang die EP 0 374 247 A1 und EP 0 325 440 A2 zu nennen. In diesen Dokumenten sind Spritzgießverfahren zur Herstellung von mehrschichtigen Behälter-Preforms beschrieben.

Ein Beispiel für Kunststoffbehälter sind Tuben, die heutzutage vielfältige Anwendung beispielsweise im medizinischen Bereich, im kosmetischen Bereich, für Zahnpflegemittel, und im Ernährungsbereich finden.

Kunststofftuben bestehen neben einem üblicherweise im Spritzgußverfahren hergestellten Tubenverschluß aus einem Tubenkörper. An diesem Körper sind zwei unterschiedliche Anforderungen zu formulieren. Zunächst muß der Tubenkörper einen festen Tubenschulterbereich aufweisen, der mit einem Schraubgewinde versehen die notwendige Festigkeit haben muß, um die Tube mit dem Tubenverschluß sicher zu verschließen. Hierbei ist zu beachten, daß bei Tuben - im Gegensatz zu Kunststoffflaschen - technische Gewinde verwendet werden, die nicht zwangsentformt sind, sondern aus dem Werkzeug herausgedreht werden. Darüber hinaus muß der Tubenkörper eine Mantelfläche haben, die dem späteren Benutzer das notwendige "Tubengefühl" vermittelt, nämlich eine hinreichend weiche Konsistenz, die ein restloses Entleeren des meist höher viskosen Inhaltsstoffes durch ausdrücken erlaubt.

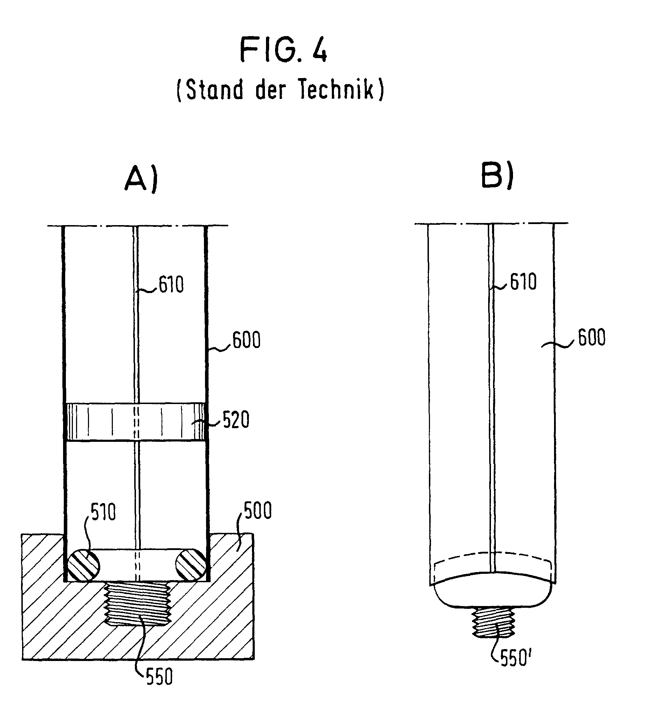

Bislang sind Tubenkörper auf zwei unterschiedliche Art und Weisen hergestellt worden, die im Stand der Technik unter dem "KMK"-Verfahren und dem "AISA"-Verfahren bekannt sind. Im folgenden werden diese zwei Verfahren unter Bezugnahme auf die Figuren 4A und 4B beschrieben.

In Figur 4A ist das "KMK"-Verfahren schematisch dargestellt. Wie man der Darstellung entnehmen kann, wird in einem Werkzeughohlraum 500 eine zylindrische Röhre 600 eingebracht, die der späteren Tubenmantelfläche entspricht. Die Röhre 600 kann aus einer (Mehrschicht)-folie bestehen, die im oben erläuterten Kalandrierverfahren hergestellt worden ist und an der Naht 610 zu einer Röhre verschweißt wurde. Nachdem die Röhre 600 in den Hohlraum 550 des Werkzeuges 500 verbracht worden ist, wird der spätere, die Tubenschulter bildene Kunststoff 510 in den Werkzeughohlraum 550 als kreisförmig umlaufende "Wurst" eingebracht. In einem nachfolgenden Schritt wird dann die Tubenschulter durch einen sich absenkenden Stempel 520 im Werkzeughohlraum 550 des Werkzeuges 500 geformt.

Gemäß dem in Figur 4B schematisch dargestellten "AISA"-Verfahren wird eine Tubenmantelfläche 600 (die wie zuvor in Zusammenhang mit dem KMK-Verfahren beschrieben hergestellt sein kann) in eine bereits vorgefertigte Tubenschulter 550' eingebracht. Diese Tubenschulter 550' kann zuvor im Spritzgießverfahren hergestellt worden sein. Die so zusammengeführten Elemente Tubenschulter 550' und Tubenmantelfläche 600 werden dann beispielsweise mit Hochfrequenz oder Heißluft verschweißt.

Beide der zuvor genannten Verfahren stellen sicher, daß der entstandene Tubenkörper den unterschiedlichen Anforderungen an Tubenschulter und Tubenmantelfläche entspricht. Nachteile dieser Herstellungsverfahren bestehen darin, daß die Tuben vergleichsweise aufwendig und kostenintensiv herzustellen sind und nur in ihrer endgültigen Größe zum Abfüllungsbetrieb verbracht werden können, wodurch sie erhebliches Transportvolumen benötigen.

Aus der EP 0 677 374 ist ein Verfahren zur Herstellung von befüllbaren Kunststofftubenkörpern bekannt. Bei diesen Verfahren wird zuerst im Spritzgußverfahren die Tubenschulter gefertigt. Dann wird im einen zweiten Herstellungschritt der Tubenkörper an die Tubenschulter extrudiert und unmittelbar danach die Tube auf ihre entgültige Größe aufgeblasen. Die fertige Tube wird daraufhin beim Abfüller bedruckt, aufgeschnitten, gefüllt und wieder verschlossen.

Aus der EP 0 170 594 ist die Herstellung von Vorformlingen (parisons) für Flaschen mit mehrlagigen Wänden im Spritzgußverfahren sowie das anschließende Aufblasen der Vorformlinge und Befüllen der entstandenen Flaschen bekannt. Die in den Flaschen abzufüllende Flüssigkeit wird dabei durch den Flaschenhals eingeführt, das heisst durch dieselbe Öffnung, durch die die Flüssigkeit bei der bestimmungsgemäßen Benutzung auch wieder austritt.

Aufgabe der vorliegenden Erfindung ist es daher, ein Verfahren zur Herstellung von befüllbaren Kunststofftubenkörpern zu schaffen, bei denen die hergestellten Behälter zum einen fertigungstechnisch einfach und preiswert produziert werden können, und zum anderen raumsparend zum Endabfüller verbracht werden können.

### 3. Zusammenfassung der Erfindung

In ihrem breitesten Aspekt besteht die Erfindung aus einem Verfahren zur Herstellung einer Tubenpreform im Spritzgußverfahren.

Der Erfinder der vorliegenden Erfindung hat herausgefunden, daß bei der Herstellung von Tubenpreforms im Spritzgießverfahren und der nachfolgenden Erstreckung insbesondere durch Erwärmung der Preform und biaxialer Expansion eine Tube erhältlich ist, deren Tubenschulter zum einen die für ein technisches Gewinde notwendige Festigkeit hat, und deren Mantelfläche zum anderen die für eine Tube gewünschte Weichheit zeigt.

Vorteilhafterweise wird gemäß einer ersten bevorzugten Ausführungsform der vorliegenden Erfindung nach Anspruch 1 zunächst eine Tubenkörperpreform hergestellt, die einen zum Inneren der Tubenkörperpreform hin offenen Schulterbereich und einen verschlossenen Endbereich aufweist. Die derart hergestellte Tubenkörperpreform kann dann zum Abfüller transportiert werden, wo sie zunächst in einem ersten Verfahrensschritt erwärmt, und dann mit Hilfe einer biaxialen Expansion in ihre endgültige Form und Größe gebracht wird. Schließlich wird in einem letzten Verfahrensschritt der verschlossene Endbereich des Tubenkörpers aufgeschnitten, um so die Füllung der Kunststofftube mit dem gewünschten Inhaltsstoff zu erlauben. Durch die Verwendung einer biaxialen Expansion (im Gegensatz zur axialen Expansion beispielsweise durch Kaltstreckung) wird die Verwendung von transparenten Tubenmaterialien möglich, die auch im expandierten Zustand eine glasartige Transparenz zeigen.

Vorteilhafterweise erfolgt die biaxiale Expansion der Tubenkörperpreform gemäß Patentanspruch 2 mittels Druckluft in einem Blasverfahren, wobei lediglich die Tubenmantelfläche expandiert wird; die Tubenschulter verbleibt in ihrer ursprünglichen Gestalt. Durch die so bewirkte biaxiale Expansion ist es möglich, eine Tube mit einer Tubenmantelfläche zu erzeugen, die sich in besonderem Maße durch das gewünschte "Tubengefühl" auszeichnet, also die nötige Weichheit aufweist. Ferner weist die derart hergestellte Tubenmantelfläche eine besondere Festigkeit auf.

Vorteilhafterweise wird gemäß Patentanspruch 3 die Tubenkörperpreform im Spritzgießverfahren hergestellt. Dies erlaubt eine äußerst kostengünstige Herstellung von Tubenkörperpreforms mit einer hohen Qualität.

Erfolgt die biaxiale Expansion der Tubenpreform mit Druckluft, kann gemäß Patentanspruch 4 die vorige Erwärmung der Preform vorteilhafterweise mit Infrarotlicht erfolgen.

Soll die erfindungsgemäße Kunststofftube beispielsweise mit einer Produktbezeichnung bedruckt werden, findet dies gemäß Patentanspruch 5 nach der Expansion der Preform statt, und vorteilhafterweise nach dem Aufschneiden des verschlossenen Endbereiches des Tubenkörpers.

Gemäß einer weiteren vorteilhaften Ausführungsform der vorliegenden Erfindung nach Anspruch 7 weist die erfindungsgemäße Kunststoffkörperpreform einen verschlossenen Endbereich auf. Dies erlaubt die besonders vorteilhafte biaxiale Expansion der Tubenkörperpreform mittels Druckluft in einem Blasverfahren.

Gemäß einer weiteren vorteilhaften Ausführungsform der vorliegenden Erfindung nach Anspruch 8 wird die erfindungsgemäße Tubenpreform mehrschichtig ausgeführt. Hierzu wird eine Spritzgießanlage mit mindestens zwei Beschickungsbehältern verwendet, wobei in den Beschickungsbehältern unterschiedliche Werkstoffe eingeführt werden. Nachdem die Werkstoffe plastifiziert worden sind, werden sie in eine Ringdüse mit konzentrisch angeordneten Ringaustrittsspalten eingepresst, wobei die Austrittsgeschwindigkeiten der Werkstoffe in Richtung und Betrag im wesentlichen gleich sind, so daß die Homogenität des ersten und zweiten Werkstoffes nach Verlassen der Düse erhalten bleibt. Die so plastifizierten Werkstoffe werden dann in einen Werkzeughohlraum eines Spritzgießwerkzeuges eingepreßt, wobei auch hier die Homogenität der Werkstoffschichten im Werkzeughohlraum erhalten bleibt. Die derart hergestellte Tubenpreform wird dann in einem nachfolgenden Verfahrensschritt in die endgültige Tube umgeformt, wobei hierzu vorteilhafterweise das Verfahren nach dem Patentanspruch 1 verwendet wird. Ein Vorteil dieser mehrschichtigen Tubenpreforms besteht in der Möglichkeit, Tuben mit bereits integriertem Verschluß- und Schulterbereich herzustellen, die sich durch vollständige Mehrschichtigkeit auszeichnen.

Die aus den erfindungsgemäßen Tubenpreforms hergestellten Tuben sind für vielfältige Verwendungen geeignet, so z.B. für:
- Tuben für kosmetische, medizinische, pharmazeutische, lebensmitteltechnische oder gefährliche Medien, etc.;
- halbsteife Tuben für Reinigungsmittel, Chemikalien, biologische Materialien oder Konsumartikel, etc.;

Die Vorteile der erfindungsgemäßen Tubenpreforms lassen sich wie folgt aufzählen:

Ein erster Vorteil liegt in den sehr niedrigen Produktionskosten, da die sonst notwendige Schritte wie Einsetzen von Schulterstücken und Verschweißen der Teile miteinander nicht mehr notwendig sind.

Ferner ist bei den mehrschichtigen Tubenpreforms durch die gezielte Dosierung der einzelnen thermoplastischen Werkstoffe möglich, kostenintensive Bestandteile optimal einzustellen, was sich erheblich auf die Herstellungskosten auswirken kann. Dies soll an einem Beispiel erläutert werden. Betrachtet wird eine vorbekannte Tube, deren Wandung aus drei Materialschichten besteht, wobei die mittlere Schicht ein teures diffusionshemmendes Material ist. Diese Schicht macht etwa 80 - 90 % des Tubenvolumens aus; auf die preiswerten inneren und äußeren Schichten entfallen lediglich 10 - 20 % des Tubenvolumens. Verwendet man zum Beispiel PE als preiswerten äußeren bzw. inneren Werkstoff (ca. 1,60 DM/kg) und EVOH als teuren mittleren Werkstoff (ca. 12,- DM/kg), würde dies bei einer durchschnittlichen Tube Materialkosten von ca. 10,96 DM/kg bedeuten. Durch das erfindungsgemäße Verfahren kann durch Optimieren des Werkstoffeinsatzes eine Kostensenkung auf ca. 2,64 DM/kg erreicht werden.

Ein weiterer Vorteil liegt in der schnellen Spritztechnik zur Preformherstellung, da bisherige Behälter durch Extrudieren hergestellt werden mußten, einer Technik, die kostenintensivere Einrichtungen und längere Produktionszyklen benötigt.

Ein weiterer Vorteil besteht in der Möglichkeit, mehrere, nämlich bis zu 144 Spritzgießwerkzeuge parallel betreiben zu können.

Die Unteransprüche sind auf vorteilhafte Weiterbildungen der Erfindung gerichtet.

Ausführungsbeispiele der vorliegenden Erfindung wird im folgenden unter Bezugnahme auf die Zeichnung näher erläutert. Es zeigt:
- Fig. 1: Eine schematische Darstellung einer Spritzgießvorrichtung zur Herstellung der erfindungsgemäßen Preforms;
- Fig. 2A: Einen Querschnitt durch eine erfindungsgemäße Mehrschichtpreform mit dem Detail K, daß eine Vergrößerung der Schichtenstruktur ist;
- Fig. 2B: Eine Anzahl von möglichen Schichtausbildungen einer Mehrschichtpreform nach der vorliegenden Erfindung;
- Fig. 3: Eine Spritzgießvorrichtung für ein Mehrschichtspritzgießverfahren;
- Fign. 4A,B: Schematische Darstellungen von Verfahren zur Herstellung von Tubenpreforms nach dem Stand der Technik.

Wie oben bereits erläutert, besteht die Erfindung in ihrem breitesten Aspekt aus dem Konzept, anstelle von fertigen Tuben zunächst Tubenpreforms im Spritzgußverfahren herzustellen. Diese Preforms (oder Vorformen oder Rohlinge) haben den Vorteil, daß sie sehr materialsparend hergestellt werden können. Der Grund hierfür liegt in der Wanddicke der Tubenmantelfläche, die für die gewünschte Weichheit der späteren Mantelfläche wichtig ist. Durch die werkstoffspezifische Viskosität von plastifizierten Kunststoffen ist es nämlich nicht möglich, Thermoplasten mit weniger als einer bestimmten Minimalwandstärke zu spritzen, besonders, wenn mehrschichtige Tuben gespritzt werden müssen.

Durch das Spritzgießen von erfindungsgemäßen Preforms wird dieses Problem gelöst, da die Mantelfläche der Preform nicht in den Endmaßen der späteren Tube gespritzt wird (lediglich die Tubenschulter wird in den Endmaßen gespritzt). Die Endmaße der Preformmantelfläche werden erst durch spätere Nachbearbeitungsverfahren erreicht, die gewöhnlich erst beim Abnehmer der Tubenpreforms durchgeführt werden.

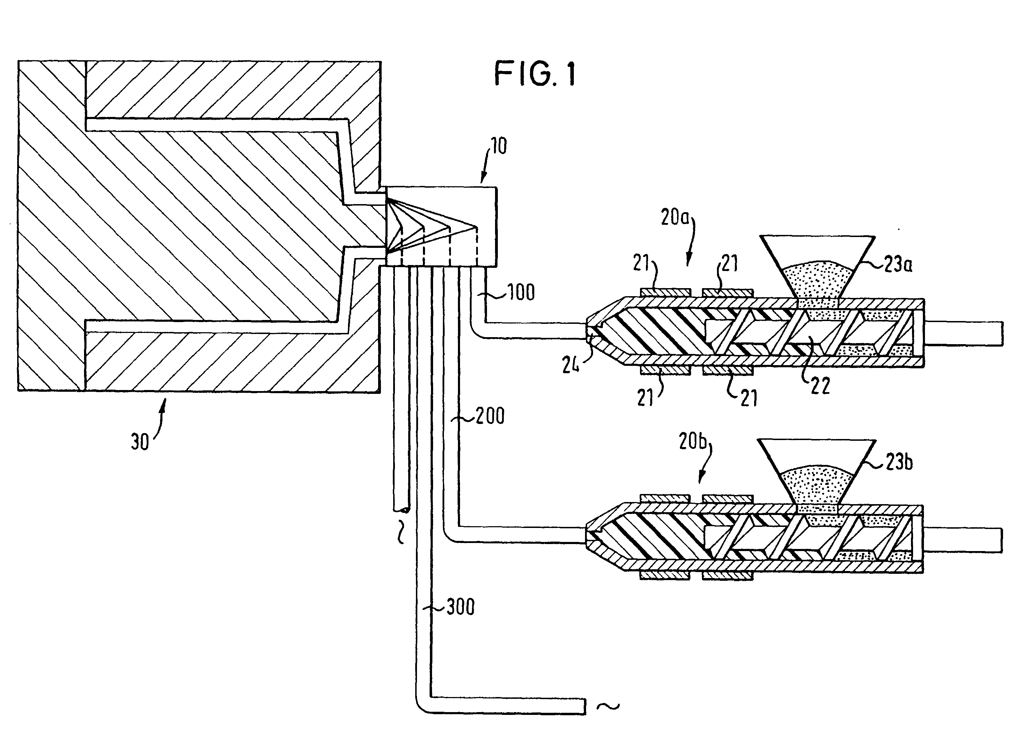

Im folgenden soll unter Bezugnahme auf Fig. 1 der prinzipiellen Aufbau einer Spritzgießvorrichtung beschrieben werden, mit der die erfindungsgemäßen Tubenpreforms hergestellt werden können. Wichtig ist hier der Hinweis, daß sich die in Fig. 1 gezeigte Spritzgießvorrichtung sowohl für die Herstellung von einfachen (d.h. einschichtigen) Preforms eignet, als auch für die Herstellung der besonders bevorzugten mehrschichtigen Preforms, wie im folgenden erläutert werden wird.

Dargestellt sind in Fig. 1 eine Vielzahl von Beschickungsvorrichtungen 20a, 20b, ..., 20i, ... 20n, die jeweils integrierte Vorrichtungen zum Fördern, Plastifizieren und Dosieren von thermoplastischen Werkstoffen repräsentieren. Die Anzahl 20i der Beschickungsvorrichtungen richtet sich nach der Anzahl der zu verwendenden Kunststoffe, bzw. nach der Anzahl der herzustellenden Materialschichten. So ist zum Beispiel für die Herstellung einer Einschichtigen Tube lediglich eine Beschickungsvorrichtung 20i zu verwenden, die mit einem gewünschten Material gefüllt sein kann. Für eine zweischichtige Tube (bei der die äußere Schicht zum Beispiel aus PP und die innere Schicht aus

PA besteht), sind zwei Beschickungsvorrichtungen 20i zu verwenden, in denen jeweils PP oder PA gefördert, plastifiziert und dosiert wird. Bei einer dreischichtigen Tube, die als innere Schicht z.B. eine weitere Schicht aus PP aufweisen soll, muß jedoch nicht eine weitere Beschickungsvorrichtung 20i verwendet werden, sondern es kann eine entsprechende Aufteilung (nicht dargestellt) der Massenströme innerhalb der Leitungen 100, 200, 300, ... zur Düse 10 beispielsweise mit einer geeigneten Ventilanordnung erfolgen.

Innerhalb der Beschickungsvorrichtungen 20i wird der Werkstoff durch Einbringen in die Speicher 23a, 23b, ..., 23i, ..., 23n zur Verfügung gestellt und durch Förderschnecken 22 in Bereiche 21 gefördert, in denen er durch thermischen Einfluß plastifiziert wird.

Der plastifizierte Werkstoff wird durch eine Verjüngung 24 in ein Leitungsnetz 100, 200, 300 eingespeist, in dem es durch Regelmechanismen (nicht dargestellt) weiterhin plastifiziert gehalten wird, so daß die thermoplastischen Werkstoffe bei Erreichen der Spritzdüse 10 in einem für Spritzgießverfahren optimalen Zustand sind.

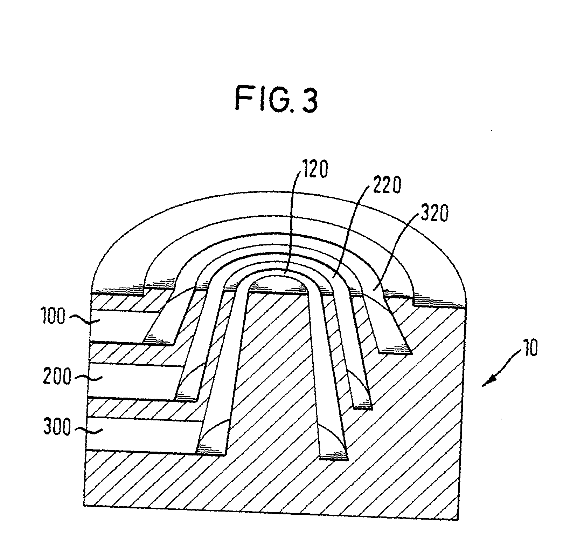

Durch die in der Düse 10 angeordneten Einlässe, die unmittelbar mit den jeweiligen Leitungen 100, 200, 300 kommunizieren, werden die plastifizierten Werkstoffe in die untereinander abgetrennten Ringspalten 120, 220, 320 (vgl. Fig. 3) der Düse eingeleitet.

Die Eintrittsgeschwindigkeit und der Förderdruck hängen von den jeweiligen Düsengeometrien ab, wobei die auftretenden Scher- und Druckkräfte innerhalb der Düse so beachtet werden müssen, daß die Austrittsgeschwindigkeit der einzelnen Werkstoffe bzw. Schichten in Richtung und Betrag im wesentlichen gleich sind.

Durch die Sicherstellung dieses Merkmals ist es möglich, daß die unterschiedlichen Schichten nach dem Verlassen der Ringspalten in ihrer Homogenität erhalten bleiben, da sich die Schichten nicht vermischen, d.h. die räumliche Einheit der einzelnen Schichtkomponenten (z.B. PA, PET, EVOH, etc.) bleibt im wesentlichen schichtweise erhalten, so daß durchgehende Komponentenschichten vorzufinden sind.

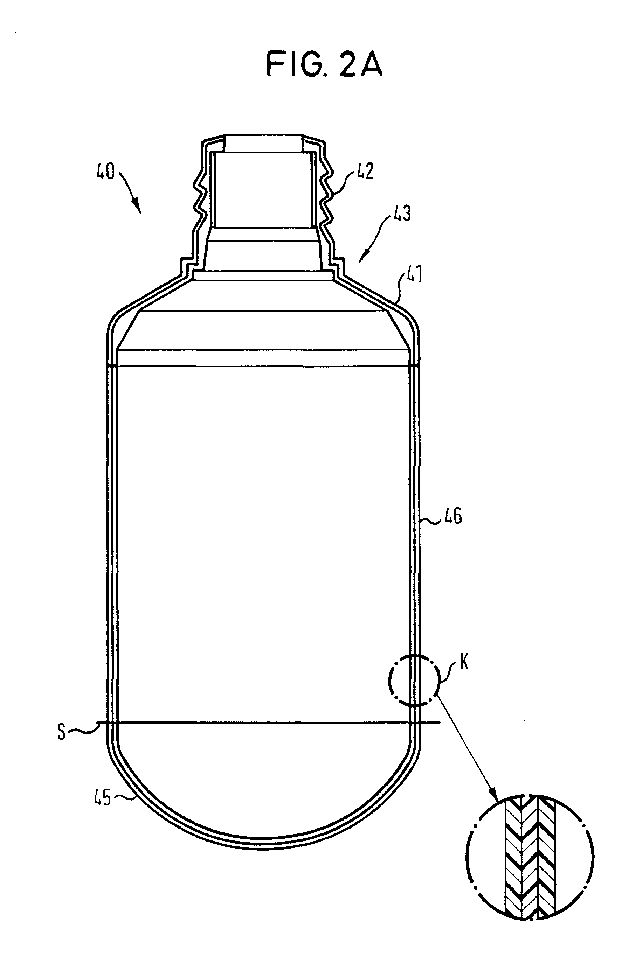

Der noch immer plastifizierte Werkstoff wird in ein Spritzgießwerkzeug 30 (vgl. Fig. 1) eingespritzt, wobei dieses in unterschiedlicher Art und Weise der herzustellenden Tubenpreform entsprechend ausgebildet sein kann. Beim in Fig. 1 dargestellten Werkzeug 30 ist zu beachten, daß es die Herstellung von Tubenpreforms 40 erlaubt, die einen offenen Endbereich 45 aufweisen (vergl. Fig. 2A, wobei hier eine Tubenpreform 40 dargestellt ist, die einen geschlossenen Endbereich 45 aufweist). Die Herstellung einer Tubenpreform 40 mit offenem Endbereich ist insofern vorteilhaft, als das die spätere Befüllung der fertigen Tube über den Endbereich 45 der Tube 40 erfolgt und somit eine bereits entsprechend offene Tube vorliegt. Ein Nachteil einer Tubenpreform 40 mit offenem Endbereich 45 liegt jedoch darin, daß für den Nachbearbeitungsschritt zur Herstellung der endgültigen Tubenabmessungen sich insbesondere monoaxiale Expansionverfahren wie Kaltstreckverfahren anbieten. Diese Verfahren haben den Nachteil, daß sie den Kunststoff extrem belasten und zu einer erhöhten Brüchigkeit der späteren Tube führen. Darüberhinaus bewirken sie, daß die Mantelfläche milchig und somit zumindest für im Kosmetikbereich einzusetzende Tuben unansehnlich wird. Daher wird es erfindungsgemäß als besonders vorteilhaft angesehen, Tubenpreforms 40 mit geschlossenem Endbereich 45 herzustellen (wie in Fig. 2A dargestellt), die mit Hilfe von biaxialen Expansionsverfahren auf ihre endgültige Größe gebracht werden können (vergl. hierzu weiter unten).

Sobald das Spritzwerkzeug 30 mit dem plastifiziertem Werkstoff beschickt ist, setzt die Erstarrungphase ein, die durch ein Kühlsystem im Werkzeug 30 unterstützt werden kann.

Da in der Regel das Werkzeug 30 aus mehreren Teilen besteht, wird durch ein Öffnen des Werkzeugs das Werkstück so freigegeben, das es leicht ausgeworfen werden kann.

Durch die Spritzgießtechnik ist es möglich, eine Vielzahl (bis zu ca. 40) von Spritzgießwerkzeugen 30 an die Fördereinrichtungen 20i anzuschließen, so daß eine hohe Fertigungsrate erzielt werden kann. Die Anzahl der herzustellenden Tubenschichten hängt von den einzelnen Werkstoffkennwerten ab, von ihren unterschiedlichen physikalischen Eigenschaften und den Vorgaben des jeweils herzustellenden Tuben.

Fig. 2A zeigt eine erfindungsgemäße Tubenpreform im Querschnitt, die als bevorzugte Ausführungsform dreischichtig ausgebildet ist. Die dargestellte Preform 40 weist einen Schulterbereich 43 auf (bestehend aus der eigentlichen Tubenschulter 41 und einem Verschlußbereich 42), sowie einen Mantelflächenbereich 46, der mit einem verschlossenen Endteil 45 versehen ist. Anstelle der dargestellten Gewindeausbildung im Verschlußbereich 42 kann auch eine andere Verschlußmöglichkeit, z.B. eine Aufsatzkappe oder ein Klappdeckel vorgesehen werden.

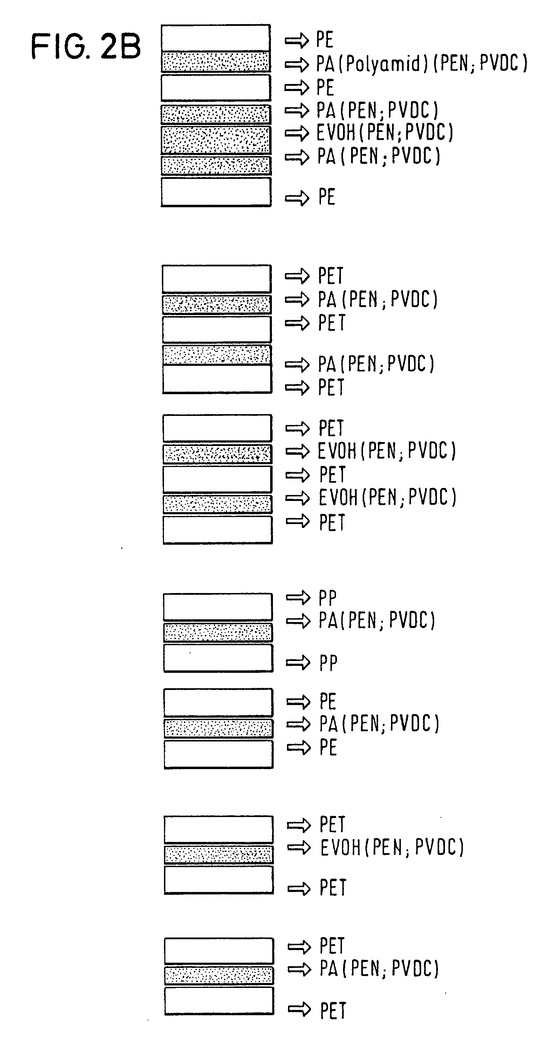

Gemeinsam ist den Schulter- und Mantelflächenbereichen 43, 46 bei der dargestellten mehrschichtigen Tubenpreform der im Detail K vergrößerte Bereich, der den Querschnitt der Behälterwand wiedergibt. Das in Fig. 2A gezeigt Detail K zeigt eine 3-lagige Wandung, es sind aber ebenso Doppelwandungen oder mehrlagige Wandungen möglich, von denen einige beispielhafte Kombinationen in Fig. 2B dargestellt sind. Entscheidend ist, daß

in allen Bereichen die Anzahl der Schichten identisch ist, der Behälter somit einstückig in einem Herstellungsvorgang gebildet wird.

Die Fig. 2B zeigt verschiedene Schichtvariationen, wobei die unterschiedlichen Tönungen unterschiedlichen Materialien entsprechen. Als Materialkombinationen sind nur einige mögliche Kombinationen aufgeführt.

Die für das Verfahren bevorzugt verwendbaren thermoplastischen Kunststoffe sind in der Regel Polymere wie Polyethylen (PE) oder Polyethylenterephthalate (PET), Polyethylenglykolterephthalate oder Polypropylen (PP). Für etwaige weitere Schichten, die zwischen den inneren oder äußeren Randschichten liegen, können Polyamid (PA) oder Ethylenvenylalkohol (EVOH) verwendet werden. Ebenso sind aber auch alle anderen Kunststoffe, die thermoplastisch verarbeitbar sind, einsetzbar.

Fig. 3 ist eine schematische perspektivische Darstellung einer erfindungsgemäßen Spritzgußdüse 10, mit der dreischichtige Tubenpreforms hergestellt werden können. Die Spritzgußdüse 10 weist drei Ringspalten 120, 220, 320 auf, die jeweils eine Schicht der Tubenpreform in das Werkzeug 30 (vergl. Fig.1) spritzen. Die Ringspalten 120, 220 und 320 sind konzentrisch angeordnet und zueinander radial beabstandet.

Zusätzlich können die Ringspalten eine axiale Beabstandung aufweisen (nicht dargestellt).

Die Ringspalten werden durch Bohrungen mit einem Leitungssystem 100, 200 und 300 verbunden, das mit den Fördereinrichtungen 20i (vergl. Fig.1) verbunden ist. Selbstverständlich ist die Anzahl der Zuleitungen und somit der Ringspalten nicht auf die dargestellte Anzahl beschränkt, sondern hängt, wie bereits beschrieben, von der Anzahl der gewünschten Schichten ab.

In der schematischen Darstellung ist die Düse 10 einteilig zu sehen, jedoch kann die einteilige Herstellung sehr aufwendig sein, so daß eine mehrteilige Ausführung, z.B. durch Schraub- oder Schweißverbindung, günstiger in der Herstellung sein kann.

Nachdem eine erfindungsgemäße Preform 40 hergestellt worden ist (die entweder ein- oder mehrschichtig sein und ein offenes oder geschlossenes Endteil 45 aufweisen kann), wird die Preform vorteilerhafterweise zum Abfüller verbracht, wo der Mantelflächenbereich 46 in einem Nachbearbeitungsverfahren auf seine endgültigen Abmessungen gebracht wird.

Ein besonders vorteilhaftes Nachbearbeitungsverfahren bietet sich für Preforms mit verschlossenem Endbereich 45 an, die aus allen Thermoplaste bestehen könnnen, und insbesondere aus PET, PP, und Grivery (amorphes Polyamid). Bei diesem Verfahren wird die Preform im Bereich der Mantelfläche vorzugsweise mit Infrarotstrahlung soweit erwärmt, bis die Mantelfläche weich wird. Dann wird die Preform in ein Werkzeug eingebracht, das im Hinblick auf den Tubenschulterbereich die Preform formschlüssig umgibt, und im Hinblick auf die Mantelfläche die endgültige Form der späteren Tube vorgibt. Dann wird, vorzugsweise mit Hilfe eines Luftdorns Druckluft in die erwärmte Preform eingeblasen, bis die Mantelfläche ihre endgültige Größe und Form erreicht hat. Dabei wird natürlich die Wandstärke der einzelnen Schichten abnehmen. Durch dieses Verfahren ist es möglich, Schichten, die aus kostenintensiven Werkstoffen bestehen, in ihrer Wandstärke stark zu reduzieren (bis unter 50 µm), so daß ein erheblicher Kostenanteil eingespart werden kann (bis zu 50% gegenüber herkömmlichen Tuben). Ferner wird durch die Verringerung der Wandstärke der Tubenbehälter weicher und somit leichter zu handhaben.

Schließlich wird in einem letzten Arbeitsgang der (nach wie vor) verschlossene Endbereich der nunmehr fertigen Tube senkrecht zur Tubenlängsachse aufgeschnitten (vergl. die Schnittlinie S in Fig. 2A), um die Befüllungsöffnung bereitzustellen.

Ein alternatives Nachbearbeitungsverfahren gemäß einer weiteren bevorzugten Ausführungsform der vorliegenden Erfindung ist ein monoaxiales Expansionsverfahren, das sich für Tubenpreforms mit offenem Endbereich 45 (vergl. Fig. 2A) anbietet. Ein Beispiel für ein derartiges Verfahren ist ein Kaltformverfahren, bei dem die Tubenpreforms 40 kalt in ihrer Längsrichtung gestreckt werden. Hierbei wird die Mantelfläche der Preform 40 bis um das 3,5fache oder mehr ihrer Länge gestreckt.

Da Blasformgebungsverfahren und Kaltstreckverfahren dem Durschnittsfachmann hinreichend bekannt sind, wird hier darauf verzichtet, auf sie im einzelnen einzugehen.

Es wird schließlich darauf hingewiesen, daß die oben dargestellten Beispiele nur erläuternden Charakter haben und nicht so aufgefaßt werden sollen, daß sie den Schutzbereich einschränken. Dieser soll allein durch die beigefügten Ansprüche definiert sein.

## Patentansprüche

1. Verfahren zur Herstellung von befüllbaren Kunststofftubenkörpern, das die folgenen Schritte umfasst:
a. Herstellen einer Tubenkörperpreform (40) im Spritzgußverfahren, die einen zum Inneren der Tubenkörperpreform hin offenen Schulterbereich (43) und einen verschlossenen Endbereich aufweist;
b. Erwärmen der genannten Tubenkörperpreform (40);
c. Biaxiales Expandieren der genannten Tubenkörperpreform (40), um den Tubenkörper in seine endgültige Form und Größe zu bringen; und
d. Aufschneiden des verschlossenen Endbereiches (45) des Tubenkörpers (40).

2. Verfahren nach Anspruch 1, **dadurch gekennzeichnet, daß** im Schritt c.) die biaxiale Expansion mit Druckluft als Blasverfahren durchgeführt wird.

3. Verfahren nach einem der vorigen Ansprüche, **dadurch gekennzeichnet, daß** im Schritt b.) die Erwärmung der Tubenkörperpreform (40) durch Infrarotstrahlung oder Heißluft erfolgt.

4. Verfahren nach einem der vorigen Ansprüche, **dadurch gekennzeichnet, daß** es desweiteren den Schritt des Bedruckens des biaxial expandierten Tubenkörpers mit der gewünschten Tubenaufschrift umfaßt.

5. Verfahren nach einem der vorigen Ansprüche, **dadurch gekennzeichnet, daß** es desweiteren die folgenden Schritte umfasst:
- Füllen des biaxial expandierten Tubenkörpers und dem gewünschten Inhaltsstoff über den offenen Endbereich; und
- Verschließen des offenen Endbereichs (45) mittels Verschweißen

6. Verfahren nach Anspruch 1, das im Schritt a) die folgenden Schritte umfasst:
a. Füllen von mindestens zwei Beschickungsbehältern (23a,b) mit jeweils einem ersten thermoplastischen Werkstoff in den ersten Beschickungsbehälter (23a) und einem zweiten thermoplastischen Werkstoff in den zweiten Beschickungsbehälter (23b);
b. Plastifizieren des ersten und zweiten thermoplastischen Werkstoffs in den jeweiligen Beschickungsbehältern;
c. Einpressen des ersten und zweiten thermoplastischen Werkstoffs in eine Ringdüse (10) mit mindestens zwei konzentrisch angeordneten Ringaustrittspalten (120, 220), wobei die Austrittgeschwindigkeit in Richtung und Betrag des ersten und zweiten Werkstoffs im wesentlichen gleich ist, so daß die Homogenität des ersten und zweiten Werkstoffs nach Verlassen der Ringspalten (120, 220) erhalten bleibt; und
d. Einpressen der plastifizierten Werkstoffe in einen Werkzeughohlraum eines Spritzgießwerkzeuges (30), so daß die nach dem Verlassen der Ringdüse (10) bestehende Homogenität der einzelnen plastifizierten Werkstoffe auch im Werkzeughohlraum erhalten bleibt, wobei der genannte Werkzeughohlraum einer Tubenpreform entspricht.

7. Verfahren nach Anspruch 6, wobei der thermoplastische Werkstoff, der durch den äußeren Ringspalt (320) gespritzt wird, verschweißbar ist.

8. Verfahren nach Anspruch 6 oder 7, wobei der thermoplastische Werkstoff, der durch den inneren Ringspalt (110) gespritzt wird, mit dem Behälterfluid verträglich ist.

9. Verfahren nach einem der vorigen Ansprüche 6 - 8, wobei mindestens eine weitere Werkstoffschicht zwischen der äußeren und inneren Schicht angeordnet wird, die eine diffusionshemmende Wirkung auf das Behälterfluid hat.

10. Verfahren nach einem der vorigen Ansprüche 6 - 9, wobei der thermoplastische Werkstoff, der durch den äußeren Ringspalt (320) gespritzt wird, aus Polyethylen (PE), Polyethylenglykolterephathalate oder Polyalkylenterephtalate (PET) oder Polypropylen (PP) besteht.

11. Verfahren nach einem der vorigen Ansprüche 6- 10, wobei der thermoplastische Werkstoff, der durch den inneren Ringspalt (120) gespritzt wird, aus Polyethylen (PE), Polyethylenglykolterephthalate oder Polyalkylenterephthalate (PET), oder Polypropylen (PP) besteht.

12. Verfahren nach einem der vorigen Ansprüche 6 - 11, wobei die wenigstens eine zwischen der äußeren und inneren Schicht anordbare Schicht aus Polyamid (PA) und/oder (PE) und/oder (PET) und/oder (PP) und/oder Ethylenvinylalkohol (EVOH) und/oder PEN und/oder Polyethylenglykolterephthalate besteht.

13. Verfahren nach einem der vorigen Ansprüche 6 - 12, wobei die Tubenpreforms (40) einen offenen Endbereich (45) aufweisen und kaltstreckbar sind.

14. Tubenkörperpreform (40), **dadurch gekennzeichnet, daß** sie mit einem Verfahren nach dem Schritt a) des Anspruchs 1 hergestellt worden ist.

15. Befüllbarer Tubenkörper, **dadurch gekennzeichnet, daß** er mit einem Verfahren nach einem der Ansprüchen 1 - 13 hergestellt worden ist.

## Claims

1. Method for manufacturing fillable plastic tube bodies, comprising the following steps:
a. manufacturing a tube body pre-form (40) by injection molding, having a shoulder section (43) open to the interior of the tube body pre-form and a closed end section;
b. heating said tube body pre-form (40);
c. biaxially expanding said tube body pre-form (40) to bring the tube body into its final shape and size; and
d. cutting up the closed end section (45) of the tube body (40).

2. Method according to claim 1, **characterized in that** the biaxial expansion is in step c. performed as a blow method with compressed air.

3. Method according to one of the preceding claims, **characterized in that** the heating of the tube body pre-form (40) in step b. is performed by infrared radiation or hot air.

4. Method according to one of the preceding claims, **characterized in that** it further comprises the step of printing the desired label onto the biaxially expanded tube body.

5. Method according to one of the preceding claims, **characterized in that** it further comprises the following steps:
- filling the biaxially expanded tube body with the desired content material via the open end section; and
- closing the opened end section (45) by welding.

6. Method according to claim 1, comprising in step a. the following steps:
a. filling of at least two charging containers (23a, b) with a first thermoplastic material in the first charging container (23a) and a second thermoplastic material in the second charging container (23b);
b. plastifying the first and second thermoplastic material in the respective charging containers;
c. pressing the first and second thermoplastic materials into an annular die (10) with at least two concentrically arranged ring exit gaps (120, 220), wherein the exit speed is substantially the same for the first and second material with respect to direction and amount so that the homogenity of the first and second material is maintained after leaving the ring gaps (120, 220); and
d. pressing the plastified materials into a cavity of an injection molding tool (30) so that the homogenity of the single plastified materials present after leaving the annular die (10) is also maintained in the cavity of the tool, wherein said cavity of the tool corresponds to a tube pre-form.

7. Method according to claim 6, wherein the thermoplastic material injected through the outer annular gap (320) can be welded.

8. Method according to claim 6 or 7, wherein the thermoplastic material injected through the inner annular gap (110) is compatible to the fluid of the container.

9. Method according to one of the preceding claims 6 to 8, wherein at least one further material layer is arranged between the outer and inner layer having a diffusion resistant effect onto the container fluid.

10. Method according to one of the preceding claims 6 to 9, wherein the thermoplastic material which is injected through the outer annular gap (320) consists of polyethylene (PE) polyethylene glycol terephathalate or polyalkyl enterephtalate (PET), or polypropylene (PP).

11. Method according to one of the preceding claims 6 to 10, wherein the thermoplastic material injected through the inner annular gap (120) consists of polyethylene (PE) polyethylene glycol terephthalate or polyalcyl enterephthalate (PET) or polypropylene (PP).

12. Method according to one of the preceding claims 6 to 11, wherein the at least one layer which can be arranged between the outer and inner layer consists of polyamide (PA) and/or (PE) and/or (PET) and/or (PP) and/or ethylene vinyl alcohol (EVOH) and/or PEN and/or polyethylene glycol terephthalate.

13. Method according to one of the preceding claims 6 to 12, wherein the tube pre-forms comprise an open end section (45) and can be extended in a cold state.

14. Tube body pre-form (40), **characterized in that** it has been manufactured by a method according to step a) of claim 1.

15. Fillable tube body, **characterized in that** it has been manufactured by a method according to one of the claims 1 to 13.

## Revendications

1. Procédé destiné à la fabrication de corps tubulaires en matière plastique pouvant être remplis, comportant les phases suivantes :
a. Fabrication par procédé de moulage par injection d'une préforme de corps tubulaire (40), comportant une zone d'épaulement (43) ouverte vers l'intérieur de la préforme de corps tubulaire, et une zone d'extrémité fermée ;
b. Chauffage de ladite préforme de corps tubulaire (40) ;
c. Expansion biaxiale de ladite préforme de corps tubulaire (40) afin de donner au corps tubulaire sa forme et sa taille définitives ; et
d. Ouverture par découpe de la zone d'extrémité (45) fermée du corps tubulaire (40).

2. Procédé selon la revendication 1, **caractérisé en ce que**, au cours de la phase c.), l'expansion biaxiale avec de l'air comprimé est effectuée en tant que procédé de soufflage.

3. Procédé selon l'une quelconque des revendications précédentes, **caractérisé en ce que**, au cours de la phase b.), le chauffage de la préforme de corps tubulaire (40) est effectué par un rayonnement infrarouge ou de l'air chaud.

4. Procédé selon l'une quelconque des revendications précédentes, **caractérisé en ce qu'**il comporte en outre la phase de l'impression du corps tubulaire expansé biaxialement avec l'inscription souhaitée de tube.

5. Procédé selon l'une quelconque des revendications précédentes, **caractérisé en ce qu'**il comporte en outre les phases suivantes :
- Remplissage du corps tubulaire expansé biaxialement, et avec la substance souhaitée, par l'intermédiaire de la zone d'extrémité ouverte ; et
- Fermeture de la zone d'extrémité (45) ouverte au moyen d'un soudage.

6. Procédé selon la revendication 1 qui, dans la phase a.), comporte les phases suivantes :
a. Remplissage d'au moins deux réservoirs d'alimentation (23a, b), une première matière thermoplastique étant introduite dans le premier réservoir d'alimentation (23a), et une deuxième matière thermoplastique dans le deuxième réservoir d'alimentation (23b) ;
b. Plastification des première et deuxième matières thermoplastiques dans les réservoirs d'alimentation respectifs ;
c. Injection des première et deuxième matières thermoplastiques dans une tuyère annulaire (10) comportant au moins deux fentes annulaires de sortie (120, 220) disposées de façon concentrique, la vitesse de sortie des première et deuxième matières étant sensiblement identique du point de vue direction et débit, de sorte que l'homogénéité des première et deuxième matières reste maintenue après la sortie des fentes annulaires (120, 220) ; et
d. Injection des matières plastifiées dans une cavité d'un outil (30) de moulage par injection, de sorte que l'homogénéité des différentes matières plastifiées existant après la sortie de la tuyère annulaire (10) reste également maintenue dans la cavité de l'outil, ladite cavité d'outil correspondant à une préforme de tube.

7. Procédé selon la revendication 6, dans lequel la matière thermoplastique qui est injectée à travers la fente annulaire extérieure (320) est soudable.

8. Procédé selon la revendication 6 ou 7, dans lequel la matière thermoplastique qui est injectée à travers la fente annulaire intérieure (110) est compatible avec le fluide du réservoir.

9. Procédé selon l'une quelconque des revendications précédentes 6 à 8, dans lequel une autre couche de matière au moins est disposée entre les couches extérieure et intérieure, laquelle exerce un effet d'inhibition de diffusion sur le fluide du réservoir.

10. Procédé selon l'une quelconque des revendications précédentes 6 à 9, dans lequel la matière thermoplastique qui est injectée à travers la fente annulaire extérieure (320) est en polyéthylène (PE), en polyéthylèneglycoltéréphtalate ou en polyalkylènetéréphtalate (PET) ou en polypropylène (PP).

11. Procédé selon l'une quelconque des revendications précédentes 6 à 10, dans lequel la matière thermoplastique qui est injectée à travers la fente annulaire intérieure (120) est en polyéthylène (PE), en polyéthylèneglycoltéréphtalate ou en polyalkylènetéréphtalate (PET), ou en polypropylène (PP).

12. Procédé selon l'une quelconque des revendications précédentes 6 à 11, dans lequel la seule couche au moins pouvant être disposée entre les couches intérieure et extérieure est en polyamide (PA) et/ou en (PE) et/ou en (PET) et/ou en (PP) et/ou en éthylènevinyle-alcool (EVOH) et/ou en PEN et/ou en polyéthylèneglycoltéréphtalate.

13. Procédé selon l'une quelconque des revendications précédentes 6 à 12, dans lequel les préformes de tubes (40) comportent une zone d'extrémité (45) ouverte, et peuvent être étirées à froid.

14. Préforme de corps tubulaire (40), **caractérisée en ce qu'**elle a été fabriquée avec un procédé selon la phase a.) de la revendication 1.

15. Corps tubulaire pouvant être rempli, **caractérisé en ce qu'**il a été fabriqué avec un procédé selon l'une quelconque des revendications 1 à 13.
